Europäisches Patentamt

European Patent Office

Office européen des brevets

(11) Veröffentlichungsnummer: **0 028 205**
**A2**

(12) **EUROPÄISCHE PATENTANMELDUNG**

(21) Anmeldenummer: **80810316.2**

(22) Anmeldetag: **20.10.80**

(51) Int. Cl.³: **C 08 J 3/22,** C 08 L 61/00,
C 08 L 63/00

(30) Priorität: **24.10.79 CH 9532/79**

(43) Veröffentlichungstag der Anmeldung: **06.05.81**
**Patentblatt 81/18**

(84) Benannte Vertragsstaaten: **CH DE FR GB IT LI NL SE**

(71) Anmelder: **CIBA-GEIGY AG, Patentabteilung Postfach, CH-4002 Basel (CH)**

(72) Erfinder: **Giesen, Mathias, Wilhelm Leuschnerstrasse 12, D-6140 Bensheim 3 (DE)**

(54) **Pigmentpräparat, Verfahren zu dessen Herstellung und dessen Verwendung.**

(57) Pigmentpräparat zur Pigmentierung von Aminoplasten, Phenoplasten und Epoxidharzen, welches als Trägerharz ein Vorkondensat der zu pigmentierenden Harze enthält. Der Pigmentanteil, bezogen auf das Gesamtpräparat, beträgt im allgemeinen 20 bis 60 Gew.-%, vorzugsweise 30 bis 50 Gew.-%. Die Herstellung des Pigmentpräparates erfolgt durch Dispergierung des Pigments in das Vorkondensat. Infolge guter Verteilung des Pigments im Pigmentpräparat und der Identität von Trägerharz und Substrat zeichnen sich die mit dem Pigmentpräparat pigmentierten Substrate durch einen guten Aspekt, homogene Farbverteilung und Ausblühbeständigkeit aus.

ACTORUM AG

- 1 -

CIBA-GEIGY AG                           <u>Case 3-12563/+</u>
Basel (Schweiz)


<u>Pigmentpräparat, Verfahren zu dessen Herstellung und dessen</u>
<u>Verwendung</u>


Gegenstand der Erfindung ist ein Pigmentpräparat zum
Pigmentieren von Aminoplasten, Phenolplasten und Epoxidharzen, das als Trägerharz ein Vorkondensat des zu pigmentierenden Harzes enthält.


Es ist z.B. aus der GB-PS 1.483.458 bekannt, bei der
Herstellung von Spritzguss- oder Pressmassenartikeln bzw.
Extrudaten das Pigment mit einem hitzehärtenden Material
zu vermischen und im Extruder während des Aufschmelzens zu
dispergieren. Bei diesem Extrusionsprozess erfolgt eine
nicht ausreichende Verteilung des Pigments im Material,
was zu einer ungenügenden Farbgebung und Farbtonkonstanz
führt. Das mach sich besonders unangenehm bei gleichzeitigem Einsatz mehrerer Pigmente zu Erzielung bestimmter
Farbtöne bemerkbar.


Es ist ausserdem z.B. aus der DE-AS 2,608,864 bekannt,
statt der Pigmente Pigmentpräparate zum Pigmentieren von
härtbaren Kunststoffen zu verwenden, welche meist aus dem
Pigment und einem Trägerharz bestehen, wobei das Trägerharz für die Applikation bestimmte Eigenschaften aufweisen
muss. Dazu gehören die Viskosität seiner Schmelze, seine
gute Verteilbarkeit im Substrat und seine Verträglichkeit
mit diesem. Während es gelungen ist, zum Pigmentieren
thermoplastischer Kunststoffe recht gut geeignete Pigmentpräparate zu schaffen, bereitet das Pigmentieren von härtbaren Kunststoffen auch weiterhin Schwierigkeiten. Wohl sind Pigmentpräparate auf Basis verschiedener Trägerstoffe zum Pigmentieren von thermohärtenden Kunststoffen beschrieben, so z.B. Präparate auf Basis von Ketonharzen, Kolophonium, Vinylalkylbenzol-Copolymerisat mit und ohne Alkylmethacrylat, Sulfonamidharz, Sucrose-Derivat oder Fettsäureamid. Alle diese Präparate weisen jedoch gravierende Nachteile auf, die ihren Einsatz praktisch verunmöglichen. Besonders nachteilig ist z.B. das starke Ausblühen der organischen Pigmente aus dem mit einem solchen Präparat pigmentierten Fertigartikel, oftmals schon bei Raumtempertur -Lagerung wobei es sich gezeigt hat, dass das Nachhärten der pigmentierten Substrate keine Verbesserung bringt. Andere Nachteile der bisher beschriebenen Präparate sind z.B. im Falle von Ketonharzen, dass sie bei thermischer Verarbeitung weiterkondensieren können und dadurch unlöslich und unschmelzbar werden, oder im Falle von Sulfonamidharzen, dass sie thermisch unbeständig sind und schon bei Temperaturen unter 100°C sich unter Abspaltung von Formaldehyd zersetzen bzw. auch ausschwitzen. Die thermische Beständigkeit der Trägerstoffe und die gute Ausblühbeständigkeit der mit entsprechenden Präparaten pigmentierten Substrate ist aber eine absolute Notwendigkeit beim Pigmentieren von Kunststoffen.

Es wurde nun gefunden, dass Pigmentpräparate, die als Trägerharz ein Vorkondensat des zu pigmentierenden härtbaren Kunststoffs enthalten, sich ausgezeichnet zum Pigmentieren von Aminoplasten, Phenoplasten und Epoxidharzen eignen. Gegenüber der Pigmentierung mit Pigment-Harz-Gemischen hat diejenige mit Pigmentpräparaten den Vorteil, dass die vom Trägerstoff umhüllten Pigmentteilchen bereits in gleichmässiger Verteilung vorliegen und sich daher auch leicht im Substrat verteilen lassen. Gegenüber den Pigmentpräparaten mit den bekannten Trägerharzen haben die erfindungsgemässen Pigmentpräparate den Vorteil, dass es wegen der Identität von Substrat und Trägerharz weder zu Ausblühungen des Pigments noch zu anderen unerwünschten Nebenerscheinungen kommt. Es muss als überraschend angesehen werden, dass bei den für die Herstellung der erfindungsgemässen Pigmentpräparate erforderlichen Bedingungen keine Polykondensation in nennenswertem Masse stattfindet.

Die Herstellung des erfindungsgemässen Pigmentpräparats kann durch Dispergieren eines Pigments oder Pigmentgemisches in das Vorkondensat eines Aminoplats, Phenoplasts oder eines Epoxidharzes entweder in einem heizbaren-Ko-Kneter bei 40-120°C, vorzugsweise bei 50-90°C, oder auf einem heizbaren Zweiwalzenwerk bei 80-120°C, vorzugsweise bei 90-100°C, bzw. durch Dispergieren in das wässrige sirupartige Vorkondensat erfolgen. Im letzteren Falle geschieht die Trocknung der erhaltenen Pigmentdispersion vorzugsweise im Unterdruck und bei Temperaturen unter 100°. Für die Herstellung der erfindungsgemässen Pigmentpräparate werden vorzugsweise folgende Trägerhazre verwendet: Melamin-Formaldehyd-Harze mit einem Molverhältnis von 1:1,5 bis 4,0,Melamin-Phenol-Formaldehyd-Harze mit einem Molverhältnis von 1:0,1 bis 0,25:1,5 bis 4,0 und Epoxidharze mit Epoxidwerten von 0,049 bis 0,21.

Die Epoxidwerte geben die Mol Epoxid/100 g Harz an und liegen vorzugsweise zwischen 0,09 und 0,15, insbesondere bei 0,108.

Neben dem Pigment können die Pigmentpräparate aus Amino- und Phenoplastvorkondensat zur Erhöhung der Lagerstabilität noch Cellulose enthalten, wobei das Gewichtsver-

- 4 -

hältnis von Vorkondensat zu Cellulose vorteilhaft 2:1 bis
5:1 beträgt.

Als zusätzliche Stoffe kommen gegebenenfalls noch
weitere Mittel wie beispielsweise Gleit-, Dispergier- und
Netzmittel in Frage. Insbesondere hat sich der Zusatz von
Wachs oder Wachsgemischen als vorteilhaft erwiesen.

Für die erfindungsgemässen Pigmentpräparate eignen sich anorganische und insbesondere organische Pigmente.

Als anorganische Pigmente kommen beispielsweise
in Betracht: Titanoxid, Eisenoxide, Chromoxid- und Chromatpigmente wie Chromoxidgrün und Bleichromat, Nickeltitanate,
Chromtitanate, Zinkeisengelb, Bleimolybdate wie Molybdatorange, Cadmiumsulfide und -sulfoselenide, Ultramarine oder
Cobaltblau und -grün. Als organische Pigmente können Russe,
Azo-, Methin-, Azomethin-, Phthalocyanin-, Nitro-, Anthra-
chinon-, Perinon-, Perylentetracarbonsäurederivat-, Dioxa-
zin-, Thioindigo-, Iminoisoindolinon-, Chinophthalon-,
Chinacridon- oder Metallkomplexpigmente, beispielsweise
von Methin- oder Azomethinfarbstoffen, sowie Gemische verschiedener Pigmente verwendet werden. Zusammen mit Pigmenten oder Füllstoffen können auch lösliche Farbstoffe zur
Herstellung der Pigmentpräparate verwendet werden.

Der Gesamtpigmentgehalt der erfindungsgemässen
Präparate kann zwischen 20 und 60 Gew.-% betragen und liegt
vorzugsweise zwischen 30 und 50 Gew.-%.

Die erfindungsgemässen Pigmentpräparate werden
zum Pigmentieren von Aminoplasten, Phenoplasten und Epoxidharzmassen verwendet. Dazu gehören vor allem die als Aminoplaste definierten härtbaren Formaldehyd-Kondensationsprodukte auf der Basis von Harnstoff, Dicyanamid, Melamin
oder/und ihren Derivaten, sowie von Anilinen, Urethanen
und Thioharnstoff, mit oder ohne Phenol. Solche Duroplaste
aus vorzugsweise 1 Mol Melamin und 1,6 bis 2,2 Mol Formaldehyd enthalten zweckmässigerweise Zusatzstoffe, wie beispielsweise Cellulosepulver, Carnaubawachs, China Clay
(Kaolin) und Phthalsäureanhydrid. Die erhaltene Mischung
kann dann in einem Ko-Kneter plastifiziert und geknetet
werden, woraufhin das Material zerkleinert, gemahlen und
tablettiert bzw. granuliert werden kann. Die Granulate aus
pigmentiertem Harz können dann im Kompressions- oder Spritzgussverfahren zu Teilen verarbeitet werden. Diese zeichnen
sich durch einen guten Aspekt, eine homogene Farbverteilung und gute Ausblühbeständigkeit aus.

In den nachfolgenden Beispielen bedeuten die
Teile, sofern nichts anderes angegeben, Gewichtsteile und
die Prozente Gewichtsprozente.

Beispiel 1: 150 Teile eines ca. 53% Vorkondensat enthaltenen sirupartigen Melamin-Formaldehyd-Harzes wurden in 177
Teile eines 45%igen Cu-Phthalcyaninblau-Teigs (C.I. 74160)
eingerührt und darin während 3 Minuten dispergiert. Das erhaltene fliessfähige Pigmentpräparat wurde anschliessend
unter Vakuum bei 48°C getrocknet und gemahlen.

Beispiel 2: 150 Teile eines ca. 53% Vorkondensat enthaltenden sirupartigen Melamin-Formaldehyd-Harzes wurden in
159 Teile eines 50%igen BON-Arylidrot-Teigs (C.I. 12370)
eingerührt und wie in Beispiel 1 aufgearbeitet.

Beispiel 3: 80 Teile Cu-Phthalocyaninblau-Pulver, enthaltend anionaktive Netzmittel, wurden durch kurzes Rühren in 100 Teilen Wasser vordispergiert. In die erhaltene Pigmentdispersion wurden 150 Teile eines ca. 53% Vorkondensat enthaltenden sirupartigen Melamin-Formaldehyd-Harzes eingerührt und wie in Beispiel 1 aufgearbeitet.

Beispiel 4: Das Beispiel 3 wurde nachgearbeitet, wobei als Pigment BON-Arylidrot-Pulver verwendet wurde.

Beispiel 5: Das Beispiel 3 wurde nachgearbeitet, jedoch ohne Verwendung von Wasser, indem das Cu-Phthalocyaninblau-Pulver direkt in den Harzsirup eingegeben und darin während 5 Minuten durch Rühren dispergiert wurde. Das erhaltene teigförmige 50%ige Pigmentpräparat wurde wie in Beispiel 1 aufgearbeitet.

Beispiel 6: Das Beispiel 5 wurde nachgearbeitet, wobei als Pigment BON-Arylidrot-Pulver verwendet wurde.

Beispiel 7: 655 Teile Melamin-Formaldehydharz, 35 Teile OP-Wachs, 10 Teile C-Wachs und 300 Teile Phthalocyaninblau wurden gemischt und anschliessend im Ko-Kneter bei 50-90°C extruhiert und nach dem Abkühlen gemahlen.

Beispiel 8: Das Beispiel 7 wurde nachgearbeitet, wobei als Pigment ein Tetrachlorisoindolinongelb (C.I. 110) verwendet wurde.

Beispiel 9: Das Beispiel 7 wurde nachgearbeitet, wobei als Pigment ein rotes Azokondensationspigment (C.I. 144) verwendet wurde.

Die gemäss den Beispielen 1 bis 9 erhaltenen Pigmentpräparate wurden für die Einfärbung von Melamin-Formaldehyd-Massen in der Spritzgussmaschine verwendet und ergaben gleichmässig pigmentierte Formteile.

Beispiel 10: 500 Teile Epoxidharz (mittlerer Epoxidwert 0,108), 500 Teile Titandioxid (Chloridtype) und 1 Teil Zinkstearat wurden gemischt und anschliessend im Ko-Kneter bei 100-110°C extrudiert und nach dem Abkühlen gemahlen.

Beispiel 11: 694 Teile Melamin-Formaldehydharz, 6 Teile Pigmentverteiler N und 300 Teile Perylenrot CI-Pigment Red 123 wurden gemischt und anschliessend bei 50-90°C im Ko-Kneter extrudiert, gemahlen und mit 0,2 % Zinkstearat gemischt.

Beispiel 12: 620 Teile Melamin-Formaldehydharz, 20 Teile OP-Wachs, 10 Teile C-Wachs, 200 Teile $TiO_2$ (Sulfattype) und 150 Teile Farbruss wurden gemischt und anschliessend bei 50-90°C in Ko-Kneter extrudiert und gemahlen.

Beispiel 13: Analog zum Beispiel 11 wurde ein Präparat bestehend aus 490 Teilen Melamin-Formaldehydharz, 8 Teilen OP-Wachs, 2 Teilen C-Wachs und 500 Teilen Cadmiumrot hergestellt.

Beispiel 14: 495 Teile Epoxidharz (mittlerer Epoxidwert: 0,12-0,145), 500 Teile Chrom-Titangelb und 5 Teile Glycerinmonostearat wurden im Schnellmischer gemischt und anschliessend im Ko-Kneter bei 100-110°C extrudiert und nach dem Abkühlen gemahlen.

– 8 –

Beispiel 15: Analog zum Beispiel 14 wurde ein Präparat bestehend aus 495 Teilen Epoxidharz (mittlerer Epoxidwert: 0,12-0,145), 300 Teilen Bariumsulfat (Blanc fixe), 200 Teilen Farbruss und 5 Teilen Glycerin-monostearat hergestellt.

Beispiel 16: Das Beispiel 14 wurde nachgearbeitet, anstelle von Chrom-Titangelb jedoch Pigment Red CI 177 verwendet.

Beispiel 17: Die in den Beispielen 1-16 beschriebenen Präparate wurden für die Einfärbung von Melamin-Formamidmassen (Melopas P) verwendet. Es konnte dadurch eine ausgezeichnete Pigmentverteilung erzielt werden.

Patentansprüche

1.        Pigmentpräparat zur Pigmentierung von Aminoplasten, Phenoplasten und Epoxidharzen, dadurch gekennzeichnet,
dass es als Trägerharz ein Vorkondensat der zu pigmentierenden Harze enthält.

2.        Pigmentpräparat gemäss Anspruch 1, dadurch gekennzeichnet, dass der Pigmentanteil, bezogen auf das Gesamtpräparat, 20 bis 60 Gew.-% beträgt.

3.        Pigmentpräparat gemäss Anspruch 1, dadurch gekennzeichnet, dass es zusätzlich zum Amino- oder Phenoplast-Vorkondensat Cellulose enthält.

4.        Pigmentpräparat gemäss Anspruch 3, dadurch gekennzeichnet, dass das Gewichtsverhältnis von Amino- bzw.
Phenoplast-Vorkondensat  zu Cellulose 2:1 bis 5:1 beträgt.

5.        Pigmentpräparat gemäss Anspruch 1, dadurch gekennzeichnet, dass es noch weitere Stoffe wie Gleit-,Dispergier- und Netzmittel enthält.

6.        Pigmentpräparat gemäss Anspruch 1, dadurch gekennzeichnet, dass es als Trägerharz das Vorkondensat eines
Melamin-Formaldehyd-Harzes  mit einem Molverhältnis von
1:1,5 bis 4,0 enthält.

7.        Pigmentpräparat gemäss Anspruch 1, dadurch gekennzeichnet, dass es als Trägerharz das Vorkondensat eines
Melamin-Phenol-Formaldehyd-Harzes mit einem Molverhältnis
von 1:0,1 bis 0,25:1,5 bis 4,0 enthält.

- 10 -

8. Pigmentpräparat gemäss Anspruch 1, dadurch gekennzeichnet, dass es als Trägerharz das Vorkondensat eines Epoxidharzes mit mittleren Epoxidwerten von 0,049 bis 0,21 enthält.

9. Verfahren zur Herstellung des Pigmentpräparats gemäss Anspruch 1, dadurch gekennzeichnet, dass das Pigment in das Vorkondensat der Aminoplaste, Phenoplaste oder Epoxidharze dispergiert wird.

10. Verfahren gemäss Anspruch 9, dadurch gekennzeichnet, dass das Pigment in das wässrige sirupartige Vorkondensat dispergiert und die erhaltene Pigmentdispersion getrocknet und gemahlen wird.

11. Verfahren gemäss Anspruch 10, dadurch gekennzeichnet, dass die erhaltene Pigmentdispersion im Unterdruck bei Temperaturen bis zu 100°C getrocknet wird.

12. Verfahren gemäss Anspruch 9, dadurch gekennzeichnet, dass das Pigment in das Vorkondensat in einem heizbaren Ko-Kneter oder auf einem heizbaren Zweiwalzenwerk dispergiert wird.

13. Verwendung des Pigmentpräparats gemäss Anspruch 1 zum Pigmentieren von Aminoplasten, Phenoplasten und Epoxidharzen.